# EUROPEAN PATENT SPECIFICATION

(11) **EP 4 513 636 B1**
(45) Date of publication and mention of the grant of the patent: **15.10.2025**
(21) Application number: 23216288.3
(22) Date of filing: 13.12.2023
(51) Int. Cl.: H01M 50/209, H01M 50/103, H01M 50/14, H01M 50/147, H01M 50/242, H01M 10/04, B23K 26/244, B23K 101/36

(54) **BATTERY CELL, BATTERY MODULE AND BATTERY PACK**
BATTERIEZELLE, BATTERIEMODUL UND BATTERIEPACK
CELLULE DE BATTERIE, MODULE DE BATTERIE ET BLOC-BATTERIE

(30) Priority: 23.08.2023 CN 202322275807 U
(43) Date of publication of application: 26.02.2025
(73) Proprietor: AESC Japan Ltd., Yokohama-Shi, Kanagawa 220-0012 (JP)
(72) Inventor: LU, Tianqi, Jiangyin City, Wuxi City, 214443 (CN); ZHANG, Jie, Jiangyin City, Wuxi City, 214443 (CN)
(74) Representative: Becker, Eberhard

(56) References cited:
- JP-A- 2014 170 678
- JP-A- 2023 501 742
- JP-B2- 4 951 814
- US-A1- 2022 123 421
- US-A1- 2023 231 241

## Description

### BACKGROUND

### Technical Field

The disclosure belongs to the technical field of batteries, and in particular, relates to a cell, a battery module and a battery pack.

### Description of Related Art

In a conventional square casing cell, the assembly of the top cover and the aluminum casing relies on the embedding of the side steps of the aluminum casing and the surrounding steps below the top cover piece, and laser welding is then performed to complete the assembly of the casing and the cover. The square casing cell uses the aluminum casing as a current collector container. When the cell is charged and discharged, gas will be produced and the electrode sheets will expand, causing the aluminum casing to be pushed outward and expand. The gas produced by the cell, the expansion of the electrode sheets, and resulting outward expansion of the aluminum casing cause the welded seam of the casing cover at the corresponding position to be torn. Long-term exposure to the fatigue expansion force may cause the strength of the welded seam of the casing cover to be weakened, or the welded seam may even be torn and fails, so the safety of the cell is thus affected.

JP 2014-170678 A relates to a secondary battery in which the occurrence of port opening deformation in rising of cell internal pressure is suppressed. US 2022/123421 A1 forms the basis for the preamble of claims 1 and 7 and relates to an energy storage apparatus including an energy storage device having a case in which a joining portion is formed; and a support member which is arranged so as to extend in an elongated shape along the joining portion at a position outside the case and along the joining portion in a side surface portion of the case, and supports the side surface portion. JP 4951814 B2 relates to a flat secondary battery including a metal plate of U-shaped cross section fitted abutting on both long side faces of a caulking part and a battery can, straddling both longitudinal directions of the caulking part from the upper side. JP 2023-501742 A1 relates to a battery pack and an electric vehicle.

### SUMMARY

In view of the abovementioned shortcomings of the related art, the disclosure aims to provide a cell and a battery module, so as to address the problems of cell safety being affected, strength of a casing cover welded seam being weakened, and the casing cover welded seam being torn and failing caused by long-term exposure to a fatigue expansion force as the casing cover welded seam at the corresponding position is torn by the outward expansion of an aluminum casing resulted from generation of gas and expansion of electrode sheets when the cell is charged and discharged.

To achieve the above and other related purposes, the disclosure provides a cell including an outer casing, a cover plate, and a reinforcing member. The invention is set out in the appended set of claims. The following disclosure serves a better understanding of the present invention.

The cover plate is welded to a top portion of the outer casing.

The reinforcing member at least includes a first surface and a second surface. The first surface is fixedly connected to one of the cover plate and the outer casing, and the second surface faces the other one of the cover plate and the outer casing.

In an embodiment of the disclosure, the cell further includes an electrode assembly stacked in the outer casing in a thickness direction, a length direction, or a height direction of the cell. When the electrode assembly is stacked in the thickness direction, the first surface is fixedly connected to the cover plate, and the second surface faces a large surface of the outer casing.

When the electrode assembly is stacked in the length direction, the first surface is fixedly connected to the cover plate, and the second surface faces a narrow surface of the outer casing.

When the electrode assembly is stacked in the height direction, the first surface is fixedly connected to the outer casing, and the second surface faces the cover plate.

In an embodiment of the disclosure, the reinforcing member is a L-shaped reinforcing member, a C-shaped reinforcing member, a T-shaped reinforcing member, or an annular reinforcing member.

In an embodiment of the disclosure, a ratio of a length of the reinforcing member to a length of the cover plate is less than or equal to 1, the reinforcing membe includes a plurality of segmented reinforcing members, and the plurality of segmented reinforcing members are arranged at intervals, when the reinforcing member is the L-shaped reinforcing member, a width of the L-shaped reinforcing member on the cover plate close to an explosion-proof valve is less than or equal to (a-b)/2, where a is a width of the cover plate and b is a width of the explosion-proof valve, and when the reinforcing member is the C-shaped reinforcing member, the C-shaped reinforcing member further includes a third surface, and the third surface and the second surface face two opposite large surfaces of the outer casing respectively. An escape groove is provided on the first surface, and the escape groove faces an explosion-proof valve on the cover plate.

According to the invention, the cell further includes a top patch, a groove is provided on a side of the top patch close to the reinforcing member to form an escape zone, and a portion of the reinforcing member arranged on the cover plate is located in the escape zone.

In an embodiment of the disclosure, an insulating layer including a heat shrinkable sleeve film, an insulating tape, or a blue film is further provided. The heat shrinkable sleeve film surrounds a top portion top of the cell and covers a surface of the reinforcing member. The insulating tape or the blue film is attached to the surface of the reinforcing member.

In an embodiment of the disclosure, two ends of the insulating tape or the blue film protrude from two ends of the reinforcing member, and portions protruding from the reinforcing member are folded and cover side surfaces of the reinforcing member.

The disclosure further provides a battery module including a casing body, a cell stack, and reinforcing members.

The cell stack includes a plurality of cells, and each of the cells includes an outer casing and a cover plate welded to a top portion of the outer casing.

The reinforcing members are at least arranged on outer sides of the two outermost cells of the cell stack, and each of the reinforcing members at least includes a first surface and a second surface. Herein, the first surface is fixedly connected to one of the cover plate and the outer casing, and the second surface faces the other one of the cover plate and the outer casing.

In an embodiment of the disclosure, each of the cells are provided with one of the reinforcing members.

In an embodiment of the disclosure, the cell stack includes an even number of single cell groups. Each of the single cell groups includes at least one of the cells, and the single cell groups are connected in series.

In an embodiment of the disclosure, the cell stack includes a plurality of single cell groups. The reinforcing members are provided on the two cells located on two sides of each of the single cell groups.

In an embodiment of the disclosure, a T-shaped reinforcing member is arranged on sides close to each other of adjacent two of the adjacent single cell groups. The T-shaped reinforcing member includes a wing plate, a sub-plate, two first surfaces, and two second surfaces. The two second surfaces are respectively arranged on two sides of the sub-plate, and the two first surfaces are respectively arranged on a bottom portion of the wing plate on the two sides of the sub-plate.

The disclosure further provides a battery pack including the cell as described above or the battery module as described above.

The disclosure provides a cell, a battery module and a battery pack. By arranging the reinforcing member on the cell, the problem of cyclic cracking caused by insufficient strength of the welded seam is solved. Further, the relative displacement between the casing body and the top cover of the cell is limited, so it is ensured that the welded seam does not fail during the cycle, the casing cover welded seam is effectively protected, and the swelled cell is protected. Further, the reinforcing member is connected to the cover plate and the casing body through laser welding or gluing, so an additional device is not required, and the operation is easy and efficient.

The disclosure provides a cell, a battery module and a battery pack. By providing the escape design on the top cover patch and the targeted coating and covering of the reinforcing member, the problem of aluminum exposure on one side edge of the top cover caused by the welding of the reinforcing member is solved. A good external insulation effect is thereby provided, and the external insulation performance of the cell is thus ensured.

The disclosure provides a cell, a battery module and a battery pack. By arranging the reinforcing members on at least the outer sides of the two outermost cells of the cell stack in the battery module, the relative displacement between the casing bodies and the top covers of the outermost cells ensures that the welded seam does not fail during the cyclic swelling of the cells, so the safety of the battery module is improved.

The disclosure provides a cell, a battery module and a battery pack. When the cell stack includes an even number of the cells and the positive and negative electrodes of the cells are arranged in an alternating manner, the L-shaped reinforcing members are provided only on the outer sides of the two outermost cells of the cell stack. In this way, the welded seam is ensured not to fail during the cyclic swelling process of the cells. Further, when the number of the cells is an even number, the two outermost cells are completely identical, so only one production line is needed to produce the cells with the reinforcing members, and production costs may be effectively reduced.

### BRIEF DESCRIPTION OF THE DRAWINGS

To make the technical solutions provided in the embodiments of the disclosure more clearly illustrated, several accompanying drawings required by the embodiments for description are briefly introduced as follows. Obviously, the drawings in the following description are merely several embodiments of the disclosure, and for a person having ordinary skill in the art, other drawings can be obtained based on these drawings without inventive effort.
FIG. 1 is a schematic structural view of a cell with a L-shaped reinforcing member according to an embodiment of the disclosure.
FIG. 2 is a schematic structural view of the L-shaped reinforcing member according to an embodiment of the disclosure.
FIG. 3 is a schematic cross-sectional structural view of the L-shaped reinforcing member being welded according to an embodiment of the disclosure.
FIG. 4 is a schematic cross-sectional structural view of the L-shaped reinforcing member being glued according to an embodiment of the disclosure.
FIG. 5 is a schematic structural view of the cell with a C-shaped reinforcing member according to an embodiment of the disclosure.
FIG. 6 is a schematic structural view of the C-shaped reinforcing member according to an embodiment of the disclosure.
FIG. 7 is a schematic cross-sectional structural view of the cell with the C-shaped reinforcing member according to an embodiment of the disclosure.
FIG. 8 is a schematic structural view of the cell with a T-shaped reinforcing member according to an embodiment of the disclosure.
FIG. 9 is a schematic structural view of the T-shaped reinforcing member according to an embodiment of the disclosure.
FIG. 10 is a schematic cross-sectional structural view of the cell with the T-shaped reinforcing member according to an embodiment of the disclosure.
FIG. 11 is a schematic structural view of the cell with two reinforcing members according to an embodiment of the disclosure.
FIG. 12 is a schematic structural view of a segmented C-shaped reinforcing member according to an embodiment of the disclosure.
FIG. 13 is a schematic structural view of a segmented T-shaped reinforcing member according to an embodiment of the disclosure.
FIG. 14 is a schematic structural view of the cell with an annular reinforcing member according to an embodiment of the disclosure.
FIG. 15 is a schematic structural view of the annular reinforcing member according to an embodiment of the disclosure.
FIG. 16 is a schematic exploded view of a top patch matched with a reinforcing member according to an embodiment of the disclosure.
FIG. 17 is a schematic local view of the top patch matched with the reinforcing member according to an embodiment of the disclosure.
FIG. 18 is a schematic exploded view of the top patch matched with the reinforcing member according to another embodiment of the disclosure.
FIG. 19 is a schematic cross-sectional view of the top patch matched with the reinforcing member according to another embodiment of the disclosure.
FIG. 20 is a schematic exploded view of the reinforcing member matched with an insulating tape according to an embodiment of the disclosure.
FIG. 21 is a schematic cross-sectional view of the reinforcing member matched with the insulating tape according to an embodiment of the disclosure.
FIG. 22 is a schematic local view of the reinforcing member matched with the insulating tape according to an embodiment of the disclosure.
FIG. 23 is a schematic cross-sectional view of the reinforcing member matched with the insulating tape of FIG. 22.
FIG. 24 is a schematic structural view of a battery module with L-shaped reinforcing members according to an embodiment of the disclosure.
FIG. 25 is a schematic structural view of the battery module with the L-shaped reinforcing members according to another embodiment of the disclosure.
FIG. 26 is a schematic structural view of the battery module with C-shaped reinforcing members according to an embodiment of the disclosure.
FIG. 27 is a schematic structural view of the battery module with the C-shaped reinforcing members according to another embodiment of the disclosure.
FIG. 28 is a schematic structural view of the battery module with T-shaped reinforcing members according to an embodiment of the disclosure.
FIG. 29 is a schematic structural view of the battery module with the T-shaped reinforcing members according to another embodiment of the disclosure.
FIG. 30 is a schematic structural view of the battery module with annular reinforcing members according to an embodiment of the disclosure.
FIG. 31 is a schematic structural view of the battery module with the annular reinforcing members according to another embodiment of the disclosure.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the scope of the invention as defined by the appended claims.

It should be noted that the drawings provided in the embodiments are merely schematically illustrating the basic idea of the disclosure. Therefore, the drawings only show components related to the disclosure rather than drawings which are depicted according to the numbers, shapes, and sizes of the components in actual implementation. In actual implementation, the types, numbers, and proportions of the components can be changed arbitrarily, and the component layout type may also be more complex.

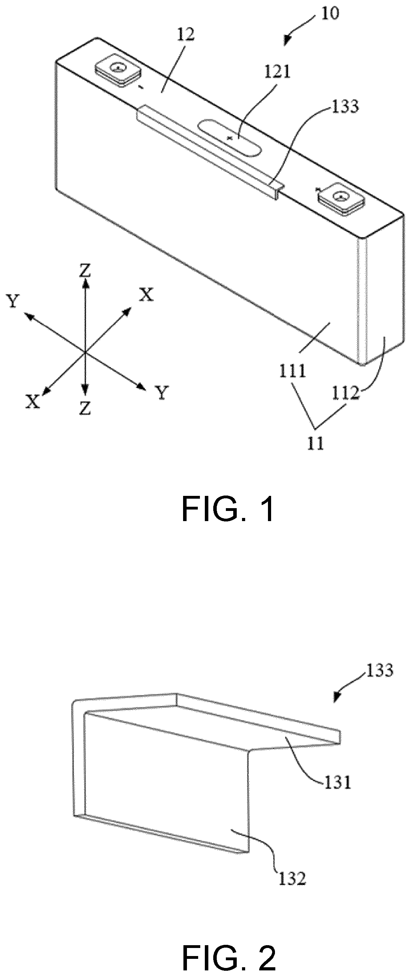

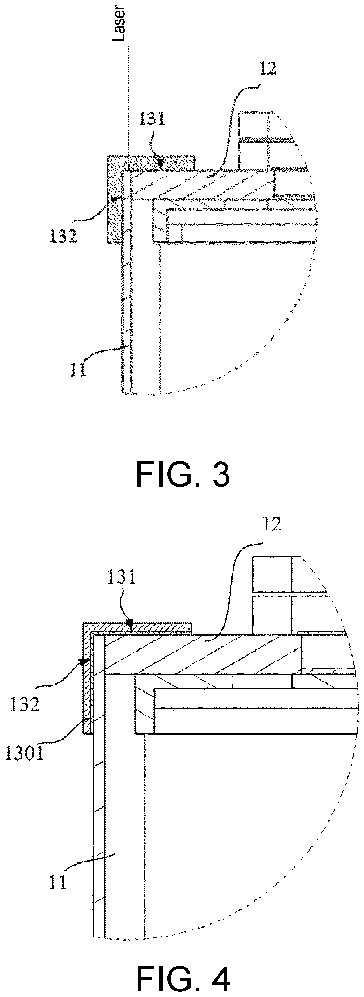

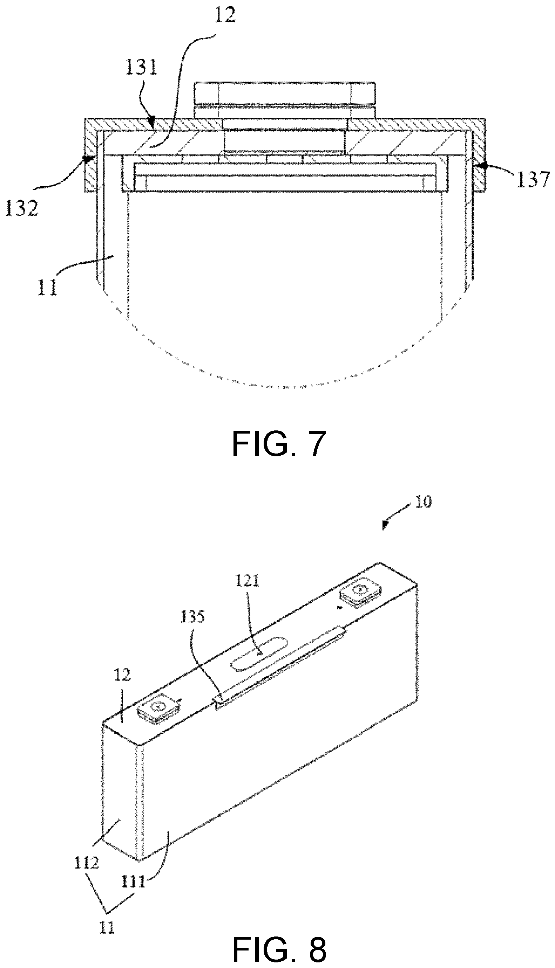

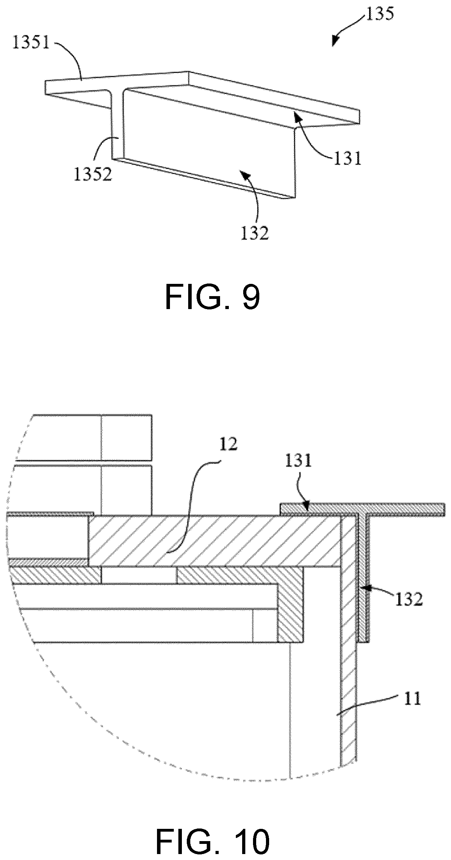

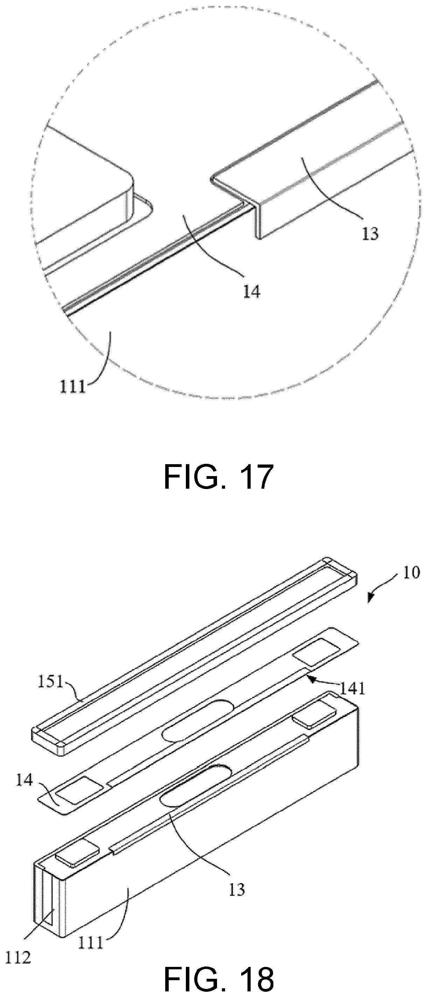

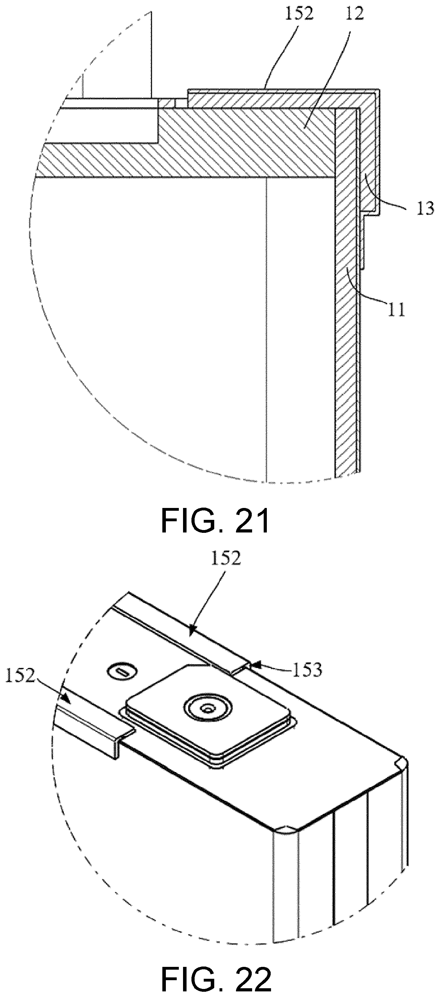

With reference to FIG. 1 to FIG. 23, the disclosure provides a cell, a battery module and a battery pack, so as to address the problems of cell safety being affected, strength of a casing cover welded seam being weakened, and the casing cover welded seam being torn and failing caused by long-term exposure to a fatigue expansion force as the casing cover welded seam at the corresponding position is torn by the outward expansion of an aluminum casing resulted from generation of gas and expansion of electrode sheets when the cell is charged and discharged. To be specific, a cell 10 includes an outer casing 11, a cover plate 12, and a reinforcing member 13, and a top portion of the outer casing 11 is provided with an opening. The cover plate 12 is installed on the top portion of outer casing 11, and specifically, is installed at the opening on the top portion of the outer casing 11 and is welded and fixed to the outer casing 11. The reinforcing member 13 is arranged between the cover plate 12 and the outer casing 11 and is configured to improve strength of a welded seam between the cover plate 12 and the outer casing 11.

With reference to FIG. 1 to FIG. 23, in this embodiment, the reinforcing member 13 at least includes a first surface 131 and a second surface 132. The first surface 131 is fixedly connected to one of the cover plate 12 and the outer casing 11, and the second surface 132 faces the other one of the cover plate 12 and the outer casing 11. Preferably, the second surface 132 faces the cover plate 12 or the outer casing 11 from the front. For instance, the first surface 131 is fixedly connected to the cover plate 12, and the second surface 132 faces a surface of the outer casing 11 from the front. Alternatively, the first surface 131 is fixedly connected to the outer casing 11, and the second surface 132 faces the cover plate 12 from the front. It should be noted that in this embodiment, the first surface 131 and the cover plate 12 or the outer casing 11 may be connected by laser welding or gluing. The second surface 132 and the outer casing 11 or the cover plate 12 may be connected by laser welding or gluing or may be arranged directly opposite each other and are not fixedly connected to each other. In this way, when the cell 10 swells, the swelling of the cell 10 is limited, so that the relative displacement of the outer casing 11 and the cover plate 12 in the cell 10 is limited, so it is ensured that the welded seam does not fail during the cycle, and a casing cover welded seam is effectively protected. It should be noted that in this embodiment, a ratio of an aspect ratio of the cell 10 is greater than 12, and the cell under this aspect ratio is more likely to swell, thereby causing the casing cover welded seam to fail. Therefore, the reinforcing member 13 is provided on the cell 10, so as to limit the swelling of the cell 10 when the cell 10 swells.

With reference to FIG. 1 to FIG. 23, in this embodiment, the cell 10 further includes an electrode assembly stacked in the outer casing 11. For instance, the electrode assembly may be stacked in a thickness direction X, a length direction Y, or a height direction Z of the cell. When the electrode assembly is stacked in the thickness direction, the first surface 131 is fixedly connected to the cover plate 12, and the second surface 132 faces a large surface 111 of the outer casing 11. When the electrode assembly is stacked in the length direction, the first surface 131 is fixedly connected to the cover plate 12, and the second surface 132 faces a narrow surface 112 of the outer casing 11. When the electrode assembly is stacked in the height direction, the first surface 131 is fixedly connected to the outer casing 11, and the second surface 132 faces the cover plate 12. That is, the first surface 131 is configured to fix and install the reinforcing member 13, and the second surface 132 is configured to limit the relative displacement of the outer casing 11 and the cover plate 12 in the cell 10, so that it is ensured that the welded seam does not fail during the cycle, and the casing cover welded seam is effectively protected.

With reference to FIG. 1 to FIG. 23, in this embodiment, the reinforcing member 13 may be any one of a L-shaped reinforcing member 133, a C-shaped reinforcing member 134, a T-shaped reinforcing member 135, and an annular reinforcing member 136. The reinforcing member 13 may be connected to the cover plate 12 and the outer casing 11 through laser welding or glue 1301, so an additional device is not required, and it is easy and efficient to operate.

With reference to FIG. 1 to FIG. 4 and FIG. 8 to FIG. 10, in this embodiment, the first surface 131 being fixedly connected to the cover plate 12 and the second surface 132 facing the large surface 111 of the outer casing 11 is taken as an example for description. The L-shaped reinforcing member 133 includes one first surface 131 and one second surface 132. The first surface 131 and the second surface are located on one side of the first surface 131 and are bent opposite to the first surface 131. The first surface 131 is welded and fixed to the cover plate 12 through laser welding, and the second surface 132 faces the large surface 111 of the outer casing 11. The T-shaped reinforcing member 135 includes a wing plate 1351, a sub-plate 1352, two first surfaces 131, and two second surfaces 132. The two second surfaces 132 are arranged respectively on two sides of the sub-plate 1352, and the two second surfaces 132 are respectively arranged on a bottom portion of the wing plate 1351 on the two sides of the sub-plate 1352. Preferably, the sub-plate 1352 and the wing plate 1352 are arranged perpendicularly to each other. For instance, the T-shaped reinforcing member 135 may be disposed between two cells 10. The two first surfaces 131 are welded and fixed to the cover plates 12 of the two cells 10 through laser welding respectively, and the two second surfaces 132 face the large surfaces 111 of the outer casings 11 of the two cells 10 respectively, so that one T-shaped reinforcing member 135 may limit the outward expansion of the large surfaces 111 of the outer casings 11 of the two cells 10 together. In some other embodiments, the first surface 131 and the second surface 132 may be fixedly connected to the cover plate 12 and the large surface 111 of the outer casing 11 respectively through the glue 1301.

With reference to FIG. 1 to FIG. 10, in this embodiment, a ratio of a length of each of the L-shaped reinforcing member 133, the C-shaped reinforcing member 134, and the T-shaped reinforcing member 135 to a length of the cover plate 12 is set to be less than or equal to 1. That is, the lengths of the L-shaped reinforcing member 133, the C-shaped reinforcing member 134, and the T-shaped reinforcing member T 135 are less than the length of the cover plate 12. Further, a width of a contact zone between the reinforcing member 13 and the outer casing 11 is set to be between 1 mm and 10 mm to ensure that the reinforcing member 13 limits the swelling of the cell 10. Further, a width of the L-shaped reinforcing member 133 on the cover plate 12 close to an explosion-proof valve 121 is less than or equal to (a-b)/2, where a is a width of the cover plate 12 and b is a width of the explosion-proof valve 121, so that the L-shaped reinforcing member 133 is prevented from interfering with the explosion-proof valve 121. In some embodiments, a ratio of a height of the second surface 132 of the reinforcing member 13 to a height of the outer casing 11 of the cell is greater than 3%, and a width of the first surface 131 of the reinforcing member 13 is greater than one-tenth of the width of the cover plate. In this way, it is ensured that the reinforcing member 13 may be reliably fixed onto the cell 10 and the reliability of limiting the swelling of the cell 10 may be ensured.

With reference to FIG. 1 to FIG. 11, in this embodiment, one large surface 111 of the outer casing 11 may be provided with the L-shaped reinforcing member 133 or the T-shaped reinforcing member 13, or two large surfaces 111 of the outer casing 11 may both be provided with the L-shaped reinforcing members 133 or T-shaped reinforcing members 135.

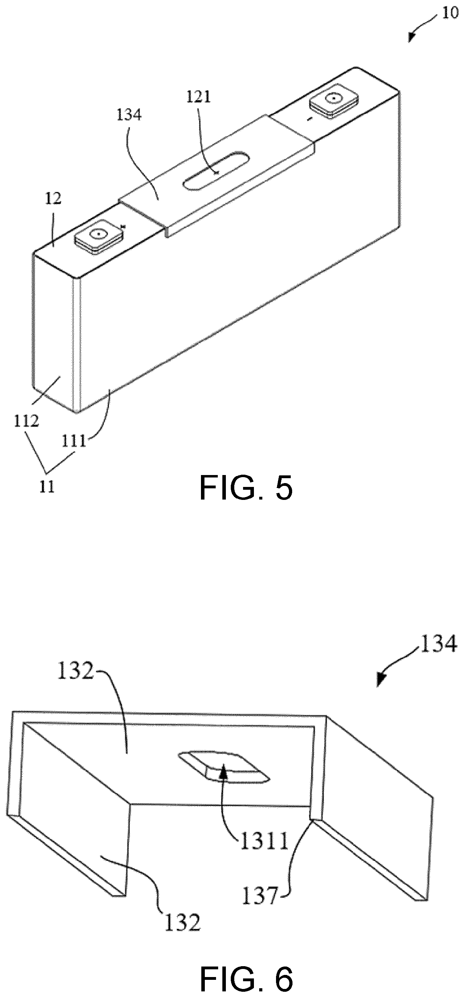

With reference to FIG. 5 to FIG. 7, in this embodiment, the C-shaped reinforcing member 134 further includes a third surface 137. The second surface 132 and the third surface 137 are respectively located on two sides of the first surface 131 and are bent relative to the first surface 131. Preferably, the second surface 132 and the third surface 137 are both perpendicular to the first surface 137, and the third surface 137 and the second surface 132 face the two opposite large surfaces 111 of the outer casing 1 respectively. Further, an escape groove 1311 is provided on the first surface 13, and the escape groove 1311 faces the explosion-proof valve 121 on the cover plate 12 to avoid the explosion-proof valve 121. Certainly, in some other embodiments, the C-shaped reinforcing member 134 may also be configured as a segmented structure. That is, the C-shaped reinforcing member 134 includes a plurality of segmented reinforcing members, and the plurality of segmented reinforcing members are arranged at intervals to avoid the explosion-proof valve 121. Further, the segmented reinforcing members may be arranged to target a key zone of the welded seam between the cover plate 12 and the outer casing 11, so that the casing cover welded seam may be effectively protected.

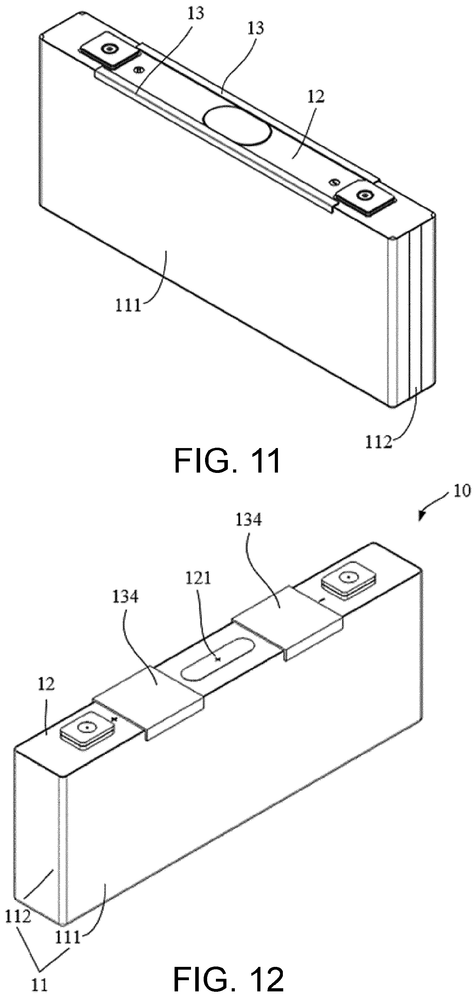

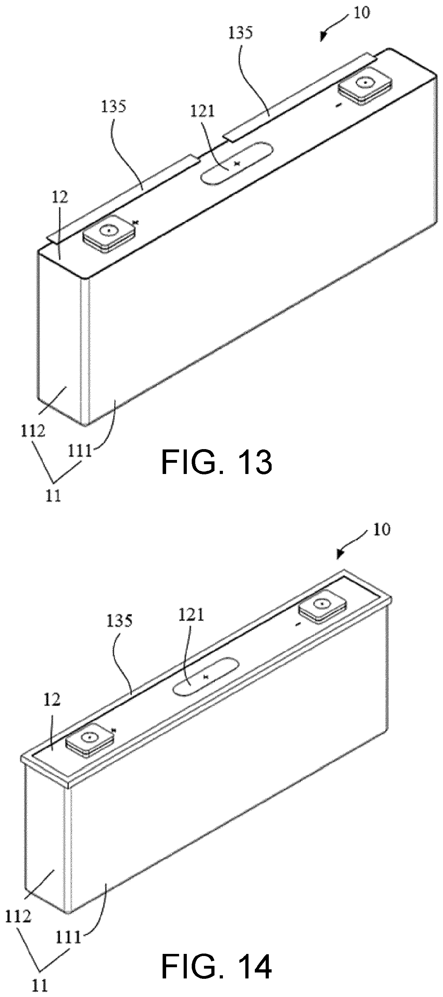

With reference to FIG. 12 and FIG. 13, in this embodiment, each of the L-shaped reinforcing member 133 and the T-shaped reinforcing member 135 may be configured as a segmented structure as well. That is, each of the L-shaped reinforcing member 133 and the T-shaped reinforcing member 135 includes a plurality of segmented reinforcing members respectively. The segmented reinforcing members may be arranged at intervals to target the key zone of the welded seam between the cover plate 12 and the outer casing 11, so that the casing cover welded seam may be effectively protected.

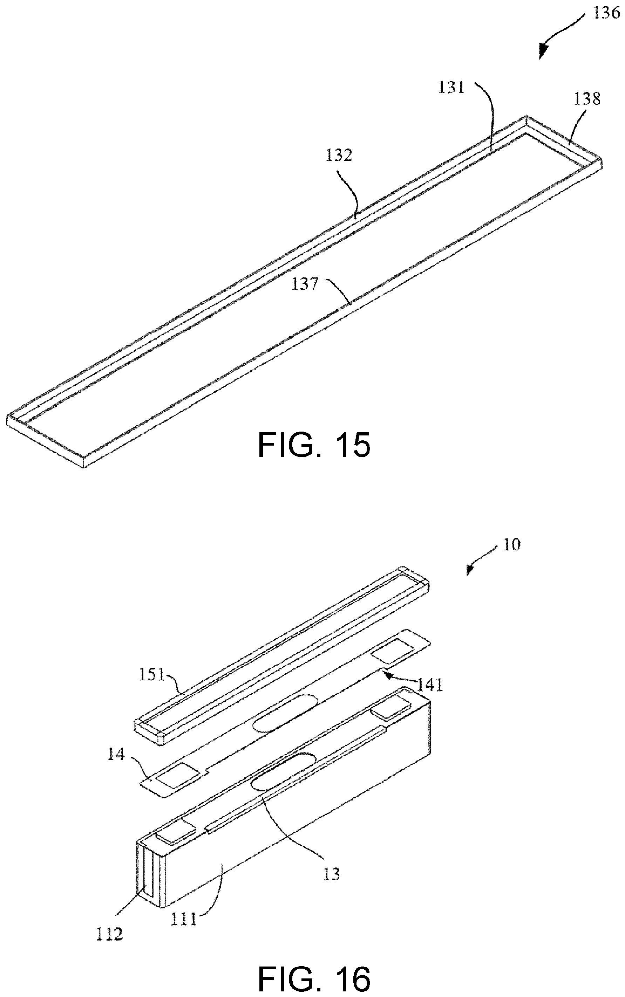

With reference to FIG. 14 and FIG. 15, in this embodiment, the annular reinforcing member 136 surrounds the welded part of the outer casing 11 and the cover plate 12 to wrap the welded seam between the outer casing 11 and the cover plate 12, so that the relative displacement of the outer casing 11 and the cover plate 12 is limited, and the welded seam is ensured not to fail during the cycle, and that the casing cover welded seam is effectively protected. For instance, the annular reinforcing member 136 includes the first surface 131, the second surface 132, the third surface 137, and two opposite fourth surfaces 138. Herein, the second surface 132 and the third surface 137 are respectively located on two sides of the first surface 131, the fourth surfaces 138 are located on the other two sides of the first surface 131, and the second surface 132, the third surface 137, and the fourth surfaces 138 are bent relative to the first surface 131. Preferably, the second surface 132, the third surface 137, and the fourth surfaces 138 are respectively perpendicularly to the first surface 131, and the first surface 131 is fixedly connected to the cover plate 12. The third surface 137 and the second surface 132 face the two opposite large surfaces 111 of the outer casing 11 respectively. The two opposite fourth surfaces 138 face the two opposite narrow surfaces 112 of the outer casing 11 respectively, so that the relative displacement of the outer casing 11 and the cover plate 12 is limited, and the casing cover welded seam is effectively protected.

It should be noted that after the reinforcing member 13 is welded, the reinforcing member 13 occupies an envelope space of a side surface and a top surface of an original cell, that is, the reinforcing member 13 occupies the space on the side and top surfaces of the original cell. The raised part forms a plurality of outer surfaces, making insulation application more difficult and making conventional top patches, blue film structures, and gluing methods no longer applicable. The main body or part of the reinforcing member is exposed, an external insulating exposure point is formed, so the risk of external short circuit increases significantly, and the insulation performance of the cell is affected. In particular, the side surface of the reinforcing member 13 greatly increase the difficulty of insulating film application. Therefore, an escape zone 141 is provided on a top patch 14, and to be specific, a groove is provided on a side of the top patch 14 close to the reinforcing member 13 to form the escape zone 141. For instance, the groove is formed by partially cutting a side of the top patch 14 close to the reinforcing member 13. A shape of the groove matches a shape of a portion of the reinforcing member 13 arranged on the cover plate 12, and an insulating layer is added to the reinforcing member 13 to ensure its insulation performance. In some other embodiments, the escape zone 141may also be formed by performing corresponding heat pressing on a local zone of the top patch 14 close to one side of the reinforcing member 13 to form a protrusion.

With reference to FIG. 16 to FIG. 19, in this embodiment, the portion of the reinforcing member 13 provided on the cover plate 12 is located in the escape zone 141. For instance, the reinforcing member 13 is a L-shaped reinforcing member 133, and the portion of the L-shaped reinforcing member 133 provided on the cover plate 12 is located in the escape zone 141. Further, an insulating layer is provided on a surface of the reinforcing member 13 to solve the problem of aluminum exposure on one side edge of the top cover caused by the welding of the reinforcing member 13, so that a good external insulation effect is provided, and the external insulation performance of the cell is ensured. To be specific, the insulating layer may be provided as a heat shrinkable sleeve film 151. The heat shrinkable sleeve film 151 surrounds a top portion top of the cell 10 and covers the surface of the reinforcing member 13. By heating and shrinking, the heat shrinkable sleeve film 151 is attached around the top portion of the cell 10 to cover the top patch 1, and insulation protection is thereby achieved.

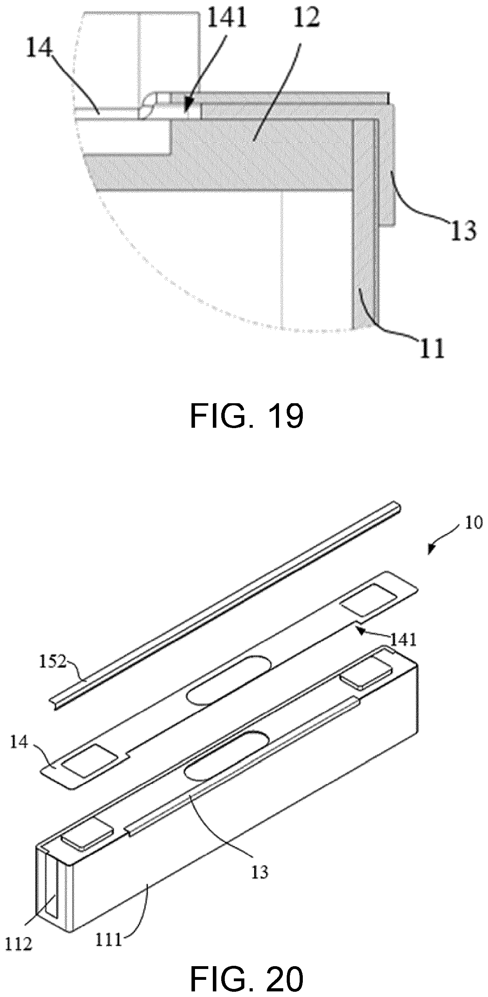

With reference to FIG. 20 to FIG. 23, in another embodiment, the insulating layer may also be configured as an insulating material such as an insulating tape 152 or a blue film and is attached to the surface of the reinforcing member 13. Two ends of the insulating tape 152 or the blue film protrude from two ends of the reinforcing member 13, and portions protruding from the reinforcing member 13 are folded and cover side surfaces of the reinforcing member 13. It should be noted that the side surfaces of the reinforcing member 13 are special-shaped surfaces when the insulating film is applied. It is difficult to form the insulating film at one time, and it is easy to form exposed points, so the risk of insulation increases. Therefore, in this embodiment, when the portions of the insulating tape 152 or the blue film protruding from the reinforcing member 13 are folded and cover the side surfaces of the reinforcing member 13, two layers of insulating tape 152 or blue film and other insulating materials are formed on bent portions 153 on the side surfaces of the reinforcing member 13, so as to better ensure that the insulating layer completely covers an exposed surface of the reinforcing member 13, and a good external insulation effect is provided.

In some other embodiments, after the reinforcing member 13 is processed and formed, the surface of the reinforcing member 13 has insulating capability by addition of a heating shrinkable insulating sleeve, integral immersing, or insulating material spraying. As described above, after the reinforcing member 13 is welded, the insulating layer is attached to its exposed surface, so that its external insulation effect is further improved.

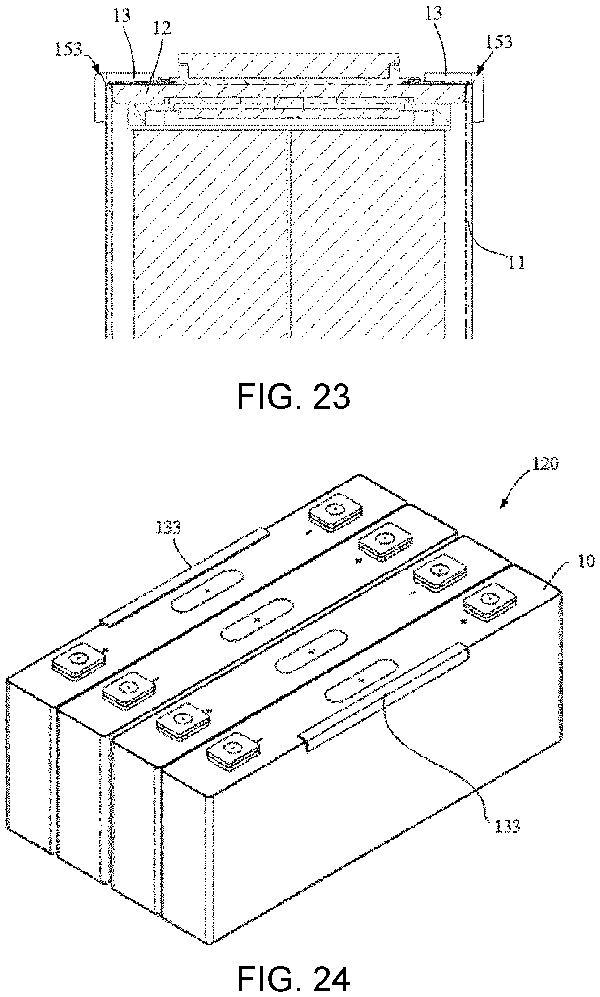

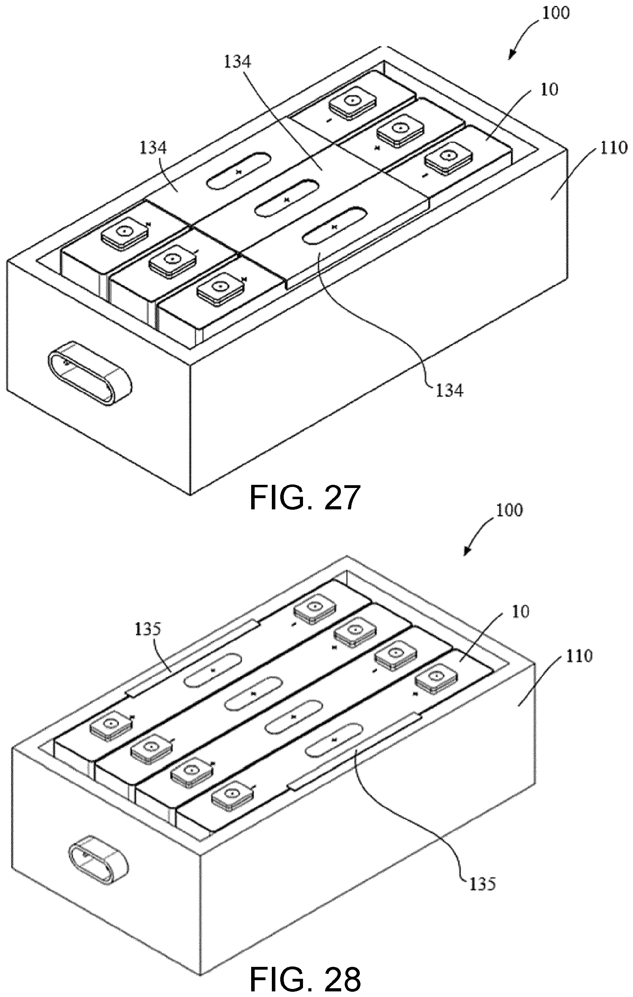

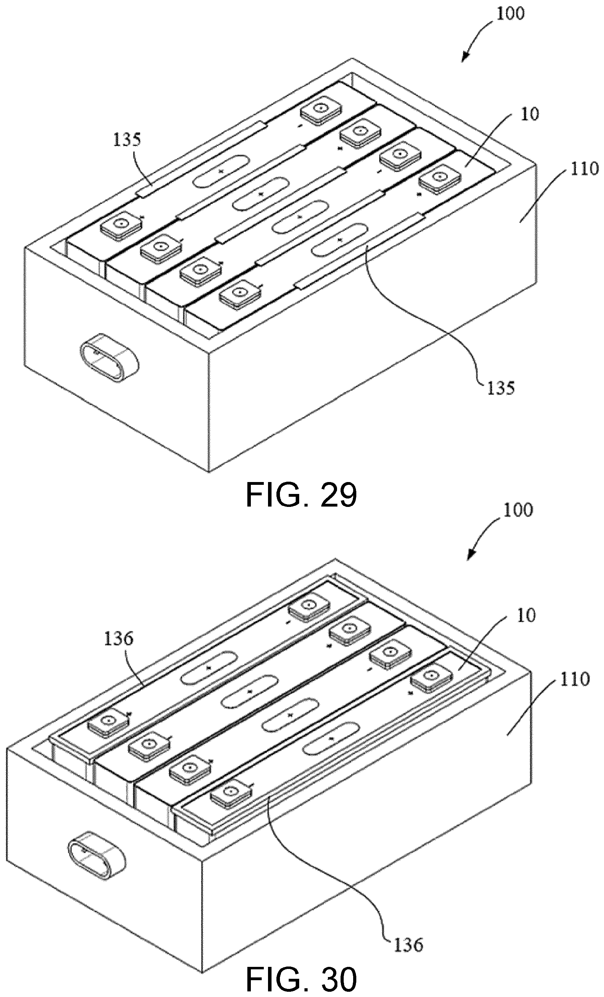

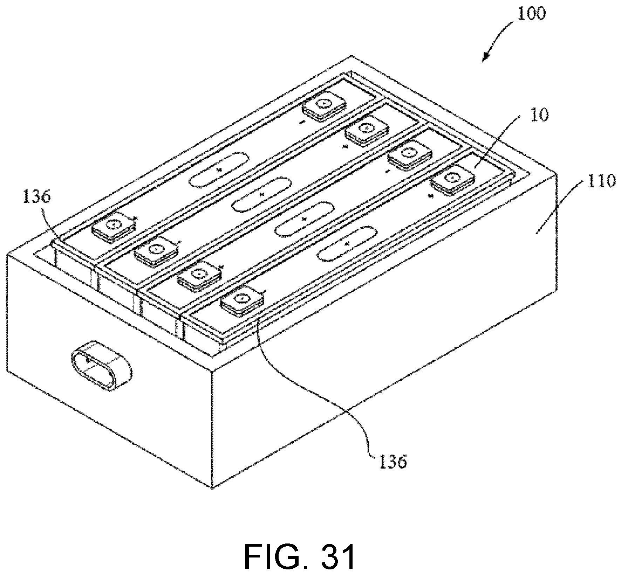

With reference to FIG. 24 to FIG. 31, the disclosure further provides a battery module. A battery module 100 includes a casing body 110, a cell stack 120, and reinforcing members 13. The cell stack 120 is installed in the casing body 110 and includes a plurality of cells 10 stacked together. In the battery module 10, the swelling of outer surfaces of the two outermost cells 10 in the cell stack 120 is most obvious. As such, the relative displacement between an outer casing 11 and a cover plate 12 located outside the two outermost cells 10 is relatively large, so that a welded seam at this location is most susceptible to failure during the cyclic swelling process. Therefore, in this embodiment, the reinforcing members 13 at least are provided on the outer sides of the two outermost cells 10 of the cell stack 120. The outermost two cells 10 refer to the two cells 10 located on both sides of the cell stack 120, and the outer sides of the cells 10 refer to large surfaces 111 of the cells close to the casing body 110. It should be noted that in other embodiments, each of the cells 10 may be provided with one of the reinforcing members 13. With reference to FIG. 1 to FIG. 23, in this embodiment, each reinforcing member 13 may be any one of a L-shaped reinforcing member 133, a C-shaped reinforcing member 134, a T-shaped reinforcing member 135, and an annular reinforcing member 136.

With reference to FIG. 24, in this embodiment, the cell stack 120 includes a plurality of single cell groups. Each of the single cell groups includes at least one of the cells 10, and the single cell groups are connected in series or in parallel. In this embodiment, the number of the single cell groups is preferably an even number, and the plurality of single cell groups are preferably connected in series. That is, the cell stack includes an even number of cells 10 connected in series, and positive and negative electrodes of the even number of cells 10 connected in series are arranged in an alternating manner. Herein, each of the reinforcing members 13 is preferably a L-shaped reinforcing member 133 or a T-shaped reinforcing member 135. Herein, the two outermost cells 10 in the cell stack 120 are completely identical and may share a single production line for production. Further, the reinforcing members 13 require the least consumable materials, so the reinforcing members 13 can effectively protect a casing cover welded seam and protect the swelled cells, and its production costs are also preferably reduced.

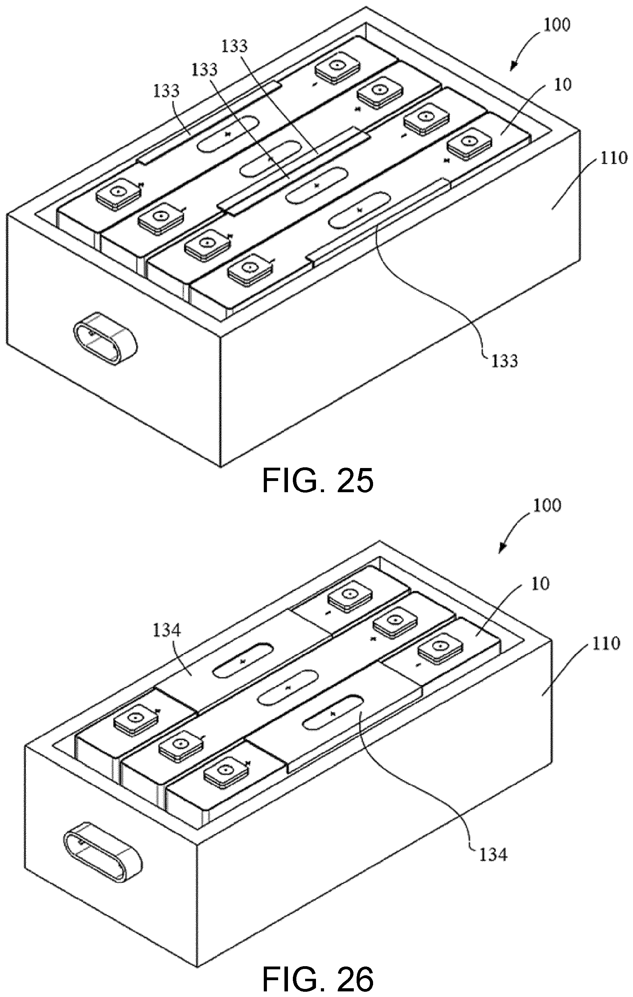

With reference to FIG. 25, in this embodiment, the reinforcing members 13 may be provided on the two cells 10 located on two sides of each of the single cell groups. The plurality of cells 10 in each single cell group are connected in series or in parallel. For instance, taking the single cell group including two mutually stacked cells 10 as an example, the reinforcing members 13 are provided on the sides of the two cells 10 away from each other in the single cell group, and the reinforcing members 13 are preferably the L-shaped reinforcing members 133. In some other embodiments, one T-shaped reinforcing member 135 is arranged on sides close to each other of the two adjacent single cell groups. That is, the T-shaped reinforcing member 135 is located between two adjacent cells 10 in the two adjacent single cell groups, so that one T-shaped reinforcing member 135 can limit the outward swelling of two cells 10 at the same time.

With reference to FIG. 26, in some other embodiments, when the total number of cells in the plurality of single cell groups is an odd number, that is, when the number of cells 10 in the cell stack 120 is an odd number, or when the number of cells 10 is set to an even number and the positive and negative electrodes of the plurality of cells 10 are arranged on the same side, the reinforcing members 13 are preferably the C-shaped reinforcing members 134 or the annular reinforcing members 136. Herein, the two outermost cells 10 in the cell stack 120 are completely identical and may share a single production line for production. The reinforcing members 13 therefore can effectively protect the casing cover welded seam and protect the swelled cells, and its production costs are also preferably reduced. It should be noted that in this embodiment, when the plurality of cells 10 are connected in series, the positive and negative electrodes of the plurality of cells 10 are preferably arranged in an alternating manner. When the plurality of cells 10 are connected in parallel, the positive and negative electrodes of the plurality of cells 10 are preferably arranged on the same side.

The disclosure further provides a battery pack including the cell as described above or the battery module as described above.

The disclosure provides a cell, a battery module and a battery pack. By arranging the reinforcing member on the cell, the problem of cyclic cracking caused by insufficient strength of the welded seam is solved. Further, the relative displacement between the casing body and the top cover of the cell is limited, so it is ensured that the welded seam does not fail during the cycle, the casing cover welded seam is effectively protected, and the swelled cell is protected. Further, the reinforcing member is connected to the cover plate and the casing body through laser welding or gluing, so an additional device is not required, and the operation is easy and efficient.

The disclosure provides a cell, a battery module and a battery pack. By providing the escape design on the top cover patch and the targeted coating and covering of the reinforcing member, the problem of aluminum exposure on one side edge of the top cover caused by the welding of the reinforcing member is solved. A good external insulation effect is thereby provided, and the external insulation performance of the cell is thus ensured.

The disclosure provides a cell, a battery module and a battery pack. By arranging the reinforcing members on at least the outer sides of the two outermost cells of the cell stack in the battery module, the relative displacement between the casing bodies and the top covers of the outermost cells ensures that the welded seam does not fail during the cyclic swelling of the cells, so the safety of the battery module is improved.

The disclosure provides a cell, a battery module and a battery pack. When the cell stack includes an even number of the cells and the positive and negative electrodes of the cells are arranged in an alternating manner, the L-shaped reinforcing members are provided only on the outer sides of the two outermost cells of the cell stack. In this way, the welded seam is ensured not to fail during the cyclic swelling process of the cells. Further, when the number of the cells is an even number, the two outermost cells are completely identical, so only one production line is needed to produce the cells with the reinforcing members, and production costs may be effectively reduced.

It should be noted that the "plurality" described in the above embodiments includes two and more than two. Further, in the embodiments, the "faces" in which a specific surface of the reinforcing member faces the cover plate or the outer casing means that a specific surface of the reinforcing member falls on the cover plate along a projection perpendicular to the cover plate, or a specific surface of the reinforcing member falls on the large surface or the narrow surface along the projection perpendicular to the large surface or the narrow surface of the outer casing. For example, "the second surface faces the large surface of the outer casing" means that the second surface of the reinforcing member falls on the large surface along a projection perpendicular to the large surface.

The above description is only preferred embodiments of the disclosure and an illustration of the applied technical principle. A person having ordinary skill in the art shall understand that the scope involved in the disclosure is not limited to the technical solutions formed by specific combinations of the above technical features and shall also cover other technical solutions formed by any combination of the above technical features or their equivalent features without departing from the scope of the invention as defined by the appended claims.

Except for the technical features in the specification, the rest of the technical features are known technologies by a person having ordinary skill in the art. In order to highlight the innovative features of the disclosure, the rest of the technical features will not be repeated herein.

### List of Reference Numerals

10: cell,
11: outer casing,
12: cover plate,
13: reinforcing member,
131: first surface,
132: second surface,
111: large surface,
112: narrow surface,
133: L-shaped reinforcing member,
134: C-shaped reinforcing member,
135: T-shaped reinforcing member,
136: annular reinforcing member,
1351: wing plate,
1352: sub-plate,
121: explosion-proof valve,
137: third surface,
1311: escape groove,
138: fourth surface,
14: top patch,
141: escape zone,
151: heat shrinkable sleeve film,
152: insulating tape,
100: battery module,
110: casing body,
120: cell stack.

## Claims

1. A battery cell (10), comprising:
an outer casing (11);
a cover plate (12) welded to a top portion of the outer casing (11); and
a reinforcing member (13) at least comprising a first surface (131) and a second surface (132), wherein the first surface (131) is fixedly connected to one of the cover plate (12) and the outer casing (11), and the second surface (132) faces the other one of the cover plate (12) and the outer casing (11), wherein an insulating layer is added to the reinforcing member (13),
**characterized in that**
wherein the battery cell (10) further comprises a top patch (14), a groove is provided on a side of the top patch (14) close to the reinforcing member (13) to form an escape zone (141), a portion of the reinforcing member (13) arranged on the cover plate (12) is located in the escape zone (141).

2. The battery cell (10) according to claim 1, wherein the battery cell (10) further comprises an electrode assembly stacked in the outer casing (11) in a thickness direction, a length direction, or a height direction of the battery cell (10), wherein
when the electrode assembly is stacked in the thickness direction, the first surface (131) is fixedly connected to the cover plate (12), and the second surface (132) faces a large surface (111) of the outer casing (11),
when the electrode assembly is stacked in the length direction, the first surface (131) is fixedly connected to the cover plate (12), and the second surface (132) faces a narrow surface (112) of the outer casing (11), and
when the electrode assembly is stacked in the height direction, the first surface (131) is fixedly connected to the outer casing (11), and the second surface (132) faces the cover plate (12).

3. The battery cell (10) according to claim 2, wherein the reinforcing member (13) is a L-shaped reinforcing member (133), a C-shaped reinforcing member (134), a T-shaped reinforcing member (135), or an annular reinforcing member (136).

4. The battery cell (10) according to claim 3, wherein a ratio of a length of the reinforcing member (13) to a length of the cover plate (12) is less than or equal to 1,
the reinforcing member (13) comprises a plurality of segmented reinforcing members (13), and the plurality of segmented reinforcing members (13) are arranged at intervals,
when the reinforcing member (13) is the L-shaped reinforcing member (133), a width of the L-shaped reinforcing member (133) on the cover plate (12) close to an explosion-proof valve (121) is less than or equal to (a-b)/2, where a is a width of the cover plate (12) and b is a width of the explosion-proof valve (121), and
when the reinforcing member (13) is the C-shaped reinforcing member (134), the C-shaped reinforcing member (134) further comprises a third surface (137), the third surface (137) and the second surface (132) face two opposite large surfaces (111) of the outer casing (11) respectively, an escape groove (1311) is provided on the first surface (131), and the escape groove (1311) faces an explosion-proof valve (121) on the cover plate (12).

5. The battery cell (10) according to claim 1, wherein the insulating layer comprises a heat shrinkable sleeve film (151), an insulating tape (152), or a blue film, the heat shrinkable sleeve film (151) surrounds a top portion top of the battery cell (10) and covers a surface of the reinforcing member (13), and the insulating tape (152) or the blue film is attached to the surface of the reinforcing member (13).

6. The battery cell (10) according to claim 5, wherein two ends of the insulating tape (152) or the blue film protrude from two ends of the reinforcing member (13), and portions protruding from the reinforcing member (13) are folded and cover side surfaces of the reinforcing member (13).

7. A battery module (100), comprising:
a casing body (110);
a cell stack (120) comprising a plurality of battery cells (10), wherein each of the battery cells (10) comprises an outer casing (11) and a cover plate (12) welded to a top portion of the outer casing (11); and
reinforcing members (13) at least arranged on outer sides of the two outermost battery cells (10) of the cell stack (120), wherein each of the reinforcing members (13) at least comprises a first surface (131) and a second surface (132), wherein the first surface (131) is fixedly connected to one of the cover plate (12) and the outer casing (11), and the second surface (132) faces the other one of the cover plate (12) and the outer casing (11), wherein an insulating layer is added to the reinforcing member (13).
wherein the battery module is **characterized in that**
each of the battery cells (10) that comprises a reinforcing member (13) further comprises a top patch (14), a groove is provided on a side of the top patch (14) close to the reinforcing member (13) to form an escape zone (141), and a portion of the reinforcing member (13) arranged on the cover plate (12) is located in the escape zone (141).

8. The battery module (100) according to claim 7, wherein each of the battery cells (10) are provided with one of the reinforcing members (13).

9. The battery module (100) according to claim 7, wherein the cell stack (120) comprises an even number of single cell groups, each of the single cell groups comprises at least one of the battery cells (10), and the single cell groups are connected in series.

10. The battery module (100) according to claim 7, wherein the cell stack (120) comprises a plurality of single cell groups, and the reinforcing members (13) are provided on the two battery cells (10) located on two sides of each of the single cell groups.

11. The battery module (100) according to claim 9, wherein a T-shaped reinforcing member (135) is arranged on sides close to each other of adjacent two of the single cell groups, the T-shaped reinforcing member (135) comprises a wing plate (1351), a sub-plate (1352), two first surfaces (131), and two second surfaces (132), the two second surfaces (132) are respectively arranged on two sides of the sub-plate (1352), and the two first surfaces (131) are respectively arranged on a bottom portion of the wing plate (1351) on the two sides of the sub-plate (1352).

12. The battery module (100) according to claim 10, wherein a T-shaped reinforcing member (135) is arranged on sides close to each other of adjacent two of the single cell groups, the T-shaped reinforcing member (135) comprises a wing plate (1351), a sub-plate (1352), two first surfaces (131), and two second surfaces (132), the two second surfaces (132) are respectively arranged on two sides of the sub-plate (1352), and the two first surfaces (131) are respectively arranged on a bottom portion of the wing plate (1351) on the two sides of the sub-plate (1352).

13. A battery pack, comprising the battery cell (10) according to any one of claims 1 to 6.

14. A battery pack, comprising the battery module (100) according to any one of claims 7 to 12.

## Patentansprüche

1. Batteriezelle (10), umfassend:
ein Außengehäuse (11);
eine Abdeckplatte (12), die auf einen oberen Abschnitt des Außengehäuses (11) aufgeschweißt ist; und
ein Verstärkungselement (13), das wenigstens eine erste Oberfläche (131) und eine zweite Oberfläche (132) umfasst, wobei die erste Oberfläche (131) fest auf einer/eines der Abdeckplatte (12) und des Außengehäuses (11) verbunden ist und die zweite Oberfläche (132) der/des anderen der Abdeckplatte (12) und dem Außengehäuse (11) gegenüber angeordnet ist, wobei eine Isolierschicht zu dem Verstärkungselement (13) hinzugefügt ist,
**dadurch gekennzeichnet, dass**
sofern die Batteriezelle (10) weiterhin ein oberes Feld (14) umfasst, ist eine Rille auf einer Seite des oberen Feldes (14) nahe an dem Verstärkungselement (13) bereitgestellt, um einen Ausweichbereich (141) zu bilden, ein Abschnitt des Verstärkungselements (13), das auf der Abdeckplatte (12) angeordnet ist, ist im Ausweichbereich (141) angeordnet.

2. Batteriezelle (10) nach Anspruch 1, wobei die Batteriezelle (10) weiterhin eine Elektrodenanordnung umfasst, die im Außengehäuse (11) in einer Dickenrichtung, einer Längenrichtung oder einer Höhenrichtung der Batteriezelle (10) übereinander angeordnet ist, wobei,
wenn die Elektrodenanordnung in der Dickenrichtung übereinander angeordnet ist, die erste Oberfläche (131) fest mit der Abdeckplatte (12) verbunden ist und die zweite Oberfläche (132) einer großen Oberfläche (111) des Außengehäuses (11) gegenüber angeordnet ist,
wenn die Elektrodenanordnung in der Längenrichtung übereinander angeordnet ist, die erste Oberfläche (131) fest mit der Abdeckplatte (12) verbunden ist und die zweite Oberfläche (132) einer schmalen Oberfläche (112) des Außengehäuses (11) gegenüber angeordnet ist und
wenn die Elektrodenanordnung in der Höhenrichtung übereinander angeordnet ist, ist die erste Oberfläche (131) fest mit dem Außengehäuse (11) verbunden und die zweite Oberfläche (132) ist der Abdeckplatte (12) gegenüber angeordnet.

3. Batteriezelle (10) nach Anspruch 2, wobei das Verstärkungselement (13) ein L-förmiges Verstärkungselement (133), ein C-förmiges Verstärkungselement (134), ein T-förmiges Verstärkungselement (135) oder ein ringförmiges Verstärkungselement (136) ist.

4. Batteriezelle (10) nach Anspruch 3, wobei ein Verhältnis einer Länge des Verstärkungselements (13) zu einer Länge der Abdeckplatte (12) kleiner als oder gleich 1 ist,
das Verstärkungselement (13) mehrere segmentierte Verstärkungselemente (13) umfasst und die mehreren segmentierten Verstärkungselemente (13) in Intervallen angeordnet sind,
wenn das Verstärkungselement (13) ein L-förmiges Verstärkungselement (133) ist, beträgt eine Breite des L-förmigen Verstärkungselements (133) auf der Abdeckplatte (12) nahe einem explosionsgeschützten Ventil (121) weniger als oder gleich (a-b)/2, wobei a eine Breite der Abdeckplatte (12) ist und b eine Breite des explosionsgeschützten Ventils (121) ist und
wenn das Verstärkungselement (13) das C-förmige Verstärkungselement (134) ist, umfasst das C-förmige Verstärkungselement (134) weiterhin eine dritte Oberfläche (137), die dritte Oberfläche (137) und die zweite Oberfläche (132) sind jeweils zwei entgegengesetzten Oberflächen (111) des Außengehäuses (11) gegenüber angeordnet, eine Ausweichrille (1311) ist auf der ersten Oberfläche (131) angeordnet und die Ausweichrille (1311) ist gegenüber einem explosionsgeschützten Ventil (121) auf der Abdeckplatte (12) angeordnet.

5. Batteriezelle (10) nach Anspruch 1, wobei die Isolierschicht eine aufschrumpfbare Schlauchfolie (151), ein Isolierband (152) oder eine blaue Folie umfasst, die aufschrumpfbare Schlauchfolie (151) einen oberen Abschnitt der Batteriezelle (10) umgibt und eine Oberfläche des Verstärkungselements (13) abdeckt und das Isolierband (152) oder die blaue Folie an der Oberfläche des Verstärkungselements (13) befestigt ist.

6. Batteriezelle (10) nach Anspruch 5, wobei zwei Enden des Isolierbandes (152) oder der blauen Folie aus zwei Enden des Verstärkungselements (13) hervorstehen und Abschnitte, die aus dem Verstärkungselement (13) hervorstehen, gefaltet sind und Seitenflächen des Verstärkungselements (13) abdecken.

7. Batteriemodul (100), umfassend:
einen Gehäusekörper (110);
einen Zellenstapel (120), umfassend mehrere Batteriezellen (10), wobei jede Batteriezelle (10) ein Außengehäuse (11) und eine Abdeckplatte (12) umfasst, die auf einem oberen Abschnitt des Außengehäuses (11) aufgeschweißt ist; und
Verstärkungselemente (13), die wenigstens an Außenseiten der zwei äußersten Batteriezellen (10) des Zellenstapels (120) angeordnet sind, wobei jedes Verstärkungselement (13) wenigstens eine erste Oberfläche (131) und eine zweite Oberfläche (132) umfasst, wobei die erste Oberfläche (131) fest mit einer/einem der Abdeckplatte (12) und dem Außengehäuse (11) verbunden ist und die zweite Oberfläche (132) gegenüber der/dem anderen der Abdeckplatte (12) und dem Außengehäuse (11) verbunden ist, wobei eine Isolierschicht dem Verstärkungselement (13) hinzugefügt ist,
wobei das Batteriemodul **dadurch gekennzeichnet ist, dass**
jede Batteriezelle (10), die ein Verstärkungselement (13) umfasst, weiterhin ein oberes Feld (14) umfasst, eine Rille auf einer Seite des oberen Feldes (14) nahe am Verstärkungselement (13) bereitgestellt ist, um einen Ausweichbereich (141) zu bilden, und ein Abschnitt des Verstärkungselements (13), der auf der Abdeckplatte (12) angeordnet ist, im Ausweichbereich (14) angeordnet ist.

8. Batteriemodul (100) nach Anspruch 7, wobei jede Batteriezelle (10) mit einem der Verstärkungselemente (13) bereitgestellt ist.

9. Batteriemodul (100) nach Anspruch 7, wobei der Zellenstapel (120) eine gerade Anzahl von einzelnen Zellgruppen umfasst, wobei jede der einzelnen Zellgruppen wenigstens eine der Batteriezellen (10) umfasst und die einzelnen Zellgruppen in Serie verbunden sind.

10. Batteriemodul (100) nach Anspruch 7, wobei der Zellstapel (120) mehrere einzelne Zellgruppen umfasst und die Verstärkungselemente (13) auf den zwei Batteriezellen (10) bereitgestellt sind, die auf zwei Seiten jeder der einzelnen Zellgruppen angeordnet sind.

11. Batteriemodul (100) nach Anspruch 9, wobei ein T-förmiges Verstärkungselement (135) auf Seiten nahe zueinander von benachbarten zwei der einzelnen Zellgruppen angeordnet ist, das T-förmige Verstärkungselement (135) eine Flügelplatte (1351), eine Anschlussplatte (1352), zwei erste Oberflächen (131) und zwei zweite Oberflächen (132) umfasst, die zwei zweiten Oberflächen (132) sind jeweils auf zwei Seiten der Anschlussplatte (1352) angeordnet und die zwei ersten Oberflächen (131) sind jeweils auf einem unteren Abschnitt der Flügelplatte (1351) auf den zwei Seiten der Anschlussplatte (1352) angeordnet.

12. Batteriemodul (100) nach Anspruch 10, wobei ein T-förmiges Verstärkungselement (135) auf Seiten nahe zueinander von benachbarten zwei der einzelnen Zellgruppen angeordnet ist, das T-förmige Verstärkungselement (135) eine Flügelplatte (1351), eine Anschlussplatte (1352), zwei erste Oberflächen (131) und zwei zweite Oberflächen (132) umfasst, die zwei zweiten Oberflächen (132) sind jeweils auf zwei Seiten der Anschlussplatte (1352) angeordnet und die zwei ersten Oberflächen (131) sind jeweils auf einem unteren Abschnitt der Flügelplatte (1351) auf den zwei Seiten der Anschlussplatte (1352) angeordnet.

13. Batteriepack, umfassend die Batteriezelle (10) nach irgendeinem der Ansprüche 1 bis 6.

14. Batteriepack, umfassend das Batteriemodul (100) nach irgendeinem der Ansprüche 7 bis 12.

## Revendications

1. Cellule de batterie (10) comprenant :
un boîtier extérieur (11) ;
une plaque de couvercle (12) soudée à une partie supérieure du boîtier extérieur (11) ; et
un élément de renfort (13) comprenant au moins une première surface (131) et une deuxième surface (132), dans laquelle la première surface (131) est fixée à un de la plaque de couvercle (12) ou du boîtier extérieur (11) et la deuxième surface (132) fait face à l'autre de la plaque de couvercle (12) et du boîtier extérieur (11), dans laquelle une couche isolante est ajoutée à l'élément de renfort (13),
**caractérisée en ce que**
dans laquelle la cellule de batterie (10) comprend en outre une plaque supérieure (14), une rainure est ménagée sur un côté de la plaque supérieure (14) à proximité de l'élément de renfort (13) pour former une zone d'échappement (141), une partie de l'élément de renfort (13) disposée sur la plaque de couvercle (12) est située dans la zone d'échappement (141).

2. Cellule de batterie (10) selon la revendication 1, dans lequel la cellule de batterie (10) comprend en outre un ensemble d'électrodes empilé dans le boîtier extérieur (11) dans une direction d'épaisseur, une direction de longueur ou une direction de hauteur de la cellule de batterie (10), dans laquelle
lorsque l'ensemble d'électrodes est empilé dans la direction d'épaisseur, la première surface (131) est fixée à la plaque de couvercle (12) et la deuxième surface (132) fait face à une grande surface (111) du boîtier extérieur (11),
lorsque l'ensemble d'électrodes est empilé dans la direction de longueur, la première surface (131) est fixée à la plaque de couvercle (12) et la deuxième surface (132) fait face à une surface étroite (112) du boîtier extérieur (11) et
lorsque l'ensemble d'électrodes est empilé dans la direction de hauteur, la première surface (131) est fixée au boîtier extérieur (11) et la deuxième surface (132) fait face à la plaque de couvercle (12).

3. Cellule de batterie (10) selon la revendication 2, dans laquelle l'élément de renfort (13) est un élément de renfort en forme de L (133), un élément de renfort en forme de C (134), un élément de renfort en forme de T (135) ou un élément de renfort annulaire (136).

4. Cellule de batterie (10) selon la revendication 3, dans laquelle le rapport entre une longueur de l'élément de renfort (13) et une longueur de la plaque de couvercle (12) est inférieur ou égal à 1,
l'élément de renfort (13) comprend une pluralité d'éléments de renfort segmentés (13) et la pluralité d'éléments de renfort segmentés (13) sont disposés à intervalles réguliers,
lorsque l'élément de renfort (13) est l'élément de renfort en forme de L (133), une largeur de l'élément de renfort en forme de L (133) sur la plaque de couvercle (12) à proximité d'une soupape antidéflagrante (121) est inférieure ou égale à (a-b)/2, où a est une largeur de la plaque de couvercle (12) et b est une largeur de la soupape antidéflagrante (121) et
lorsque l'élément de renfort (13) est l'élément de renfort en forme de C (134), L'élément de renfort en forme de C (134) comprend en outre une troisième surface (137), la troisième surface (137) et la deuxième surface (132) font face respectivement à deux grandes surfaces opposées (111) du boîtier extérieur (11), une rainure d'échappement (1311) est ménagée sur la première surface (131) et la rainure d'échappement (1311) fait face à une soupape antidéflagrante (121) sur la plaque de couvercle (12).

5. Cellule de batterie (10) selon la revendication 1, dans laquelle la couche isolante comprend un film thermorétractable (151), un ruban isolant (152) ou un film bleu , le film thermorétractable (151) entoure une partie supérieure de la cellule de batterie (10) et recouvre une surface de l'élément de renfort (13) et le ruban isolant (152) ou le film bleu est fixé à la surface de l'élément de renfort (13).

6. Cellule de batterie (10) selon la revendication 5, dans laquelle deux extrémités du ruban isolant (152) ou du film bleu dépassent des deux extrémités de l'élément de renfort (13) et des parties dépassant de l'élément de renfort (13) sont pliées et recouvrent des surfaces latérales de l'élément de renfort (13).

7. Module de batterie (100), comprenant :
un corps de boîtier (110) ;
une pile de cellules (120) comprenant une pluralité de cellules de batterie (10), dans lequel chacune des cellules de batterie (10) comprend un boîtier extérieur (11) et une plaque de couvercle (12) soudée à une partie supérieure du boîtier extérieur (11) ; et
des éléments de renfort (13) disposés au moins sur les côtés extérieurs des deux cellules de batterie les plus externes (10) de la pile de cellules (120), dans lequel chacun des éléments de renfort (13) comprend au moins une première surface (131) et une deuxième surface (132), dans lequel la première surface (131) est fixée à une de la plaque de couvercle (12) et du boîtier extérieur (11) et la deuxième surface (132) fait face à l'autre de la couche isolante (12) et du boîtier extérieur (11), dans lequel une couche isolante est ajoutée à l'élément de renfort (13),
dans lequel le module de batterie est **caractérisé en ce que**
chacune des cellules de batterie (10) qui comprend un élément de renfort (13) comprend en outre une plaque supérieure (14), une rainure est ménagée sur un côté de la plaque supérieure (14) à proximité de l'élément de renfort (13) pour former une zone d'échappement (141) et une partie de l'élément de renfort (13) disposée sur la plaque de couvercle (12) est située dans la zone d'échappement (141).

8. Module de batterie (100) selon la revendication 7, dans lequel chacune des cellules de batterie (10) est dotée d'un des éléments de renforcement (13).

9. Module de batterie (100) selon la revendication 7, dans lequel la pile de cellules (120) comprend un nombre pair de groupes de cellules individuelles, chacun des groupes de cellules individuelles comprend au moins une des cellules de batterie (10) et les groupes de cellules individuelles sont connectés en série.

10. Module de batterie (100) selon la revendication 7, dans lequel la pile de cellules (120) comprend une pluralité de groupes de cellules individuelles, et les éléments de renforcement (13) sont prévus sur les deux cellules de batterie (10) situées de part et d'autre de chacun des groupes de cellules individuelles.

11. Module de batterie (100) selon la revendication 9, dans lequel un élément de renfort en T (135) est disposé sur des côtés proches l'un de l'autre de deux groupes de cellules individuelles adjacents, l'élément de renfort en T (135) comprend une plaque d'aile (1351), une sous-plaque (1352), deux premières surfaces (131) et deux deuxièmes surfaces (132), les deux deuxièmes surfaces (132) sont respectivement disposées de part et d'autre de la sous-plaque (1352) et les deux premières surfaces (131) sont respectivement disposées sur une partie inférieure de la plaque d'aile (1351) des deux côtés de la sous-plaque (1352).

12. Module de batterie (100) selon la revendication 10, dans lequel un élément de renfort en T (135) est disposé sur des côtés proches l'un de l'autre de deux groupes de cellules individuelles adjacents, l'élément de renfort en T (135) comprend une plaque d'aile (1351), une sous-plaque (1352) et deux premières surfaces (131) et deux deuxièmes surfaces (132), les deux deuxièmes surfaces (132) sont respectivement disposées de part et d'autre de la sous-plaque (1352) et les deux premières surfaces (131) sont respectivement disposées sur une partie inférieure de la plaque d'aile (1351) de part et d'autre de la sous-plaque (1352).

13. Bloc-batterie, comprenant la cellule de batterie (10) selon une quelconque des revendications 1 à 6.

14. Bloc-batterie, comprenant le module de batterie (100) selon une quelconque des revendications 7 à 12.
